# EUROPÄISCHE PATENTSCHRIFT

(11) **EP 1 291 572 B1**
(45) Veröffentlichungstag und Bekanntmachung des Hinweises auf die Patenterteilung: **04.01.2006**
(21) Anmeldenummer: 02019613.5
(22) Anmeldetag: 03.09.2002
(51) Int. Cl.: F16P 1/00, B23Q 11/08

(54) **Verbundscheibenaufbau als Sicherheitssichtfenster für Schutzgehäuse und -türen von Materialbearbeitungsmaschinen**
Glazing assembly as safety window for protection housings or doors of material processing machines
Ensemble de vitrage pour fenêtre de sécurité pour carters ou portes de protection de machines de traitement de matériaux

(30) Priorität: 10.09.2001 DE 10144458
(43) Veröffentlichungstag der Anmeldung: 12.03.2003
(73) Patentinhaber: HEMA Maschinen- und Apparateschutz GmbH, 63500 Seligenstadt (DE); BSA Luffahrt- und Sicherheitstechnik GmbH & Co., 33649 Bielefeld (DE)
(72) Erfinder: Walter, Steffen, 63110 Rodgau-Jügesheim (DE); Asmussen, Dieter, 22926 Ahrensburg (DE); Schorning, Martin, 33602 Bielefeld (DE)
(74) Vertreter: Schumacher, Bernd

(56) Entgegenhaltungen:
- EP-A- 0 869 055
- DD-A- 50 448
- DE-A- 3 532 362
- DE-A- 4 211 194
- FR-A- 782 830
- FR-A- 870 794
- FR-A- 2 550 156
- GB-A- 1 467 116
- US-A- 1 508 761
- US-A- 1 941 179
- US-A- 3 347 004
- US-A- 5 161 055

## Beschreibung

Die Erfindung betrifft einen Verbundscheibenaufbau als Sicherheitssichtfenster für Schutzgehäuse und -türen von Materialbearbeitungsmaschinen, wie schleifenden oder spanabhebenden Maschinen, mit einer feststehenden, durchsichtigen, maschinenseitigen Glasplatte und einer hiermit randseitig verbundenen, feststehenden, durchsichtigen, durchschlagfesten oder bruchsicheren, bedienerseitigen Schutzplatte aus Kunststoff, wie einer solchen aus Polycarbonat, ohne oder mit wenigstens einer durchsichtigen Oberflächenschicht, wobei die Glasplatte einen kreisrunden Durchbruch aufweist, der von einer kreisrunden durchsichtigen Klarsicht-Drehscheibe überdeckt ist, die aus Glas ohne oder mit aufgeklebter, zur Bedienerseite weisender Kunststoffscheibe besteht und an ihrer zur Schutzplatte weisenden Seite mit einem Drehantrieb verbunden ist.

Ein solcher Sicherheits-Verbundscheibenaufbau ist einerseits durch die maschinenseitige Glasplatte resistent gegen den aggressiven Einfluß von Kühlflüssigkeit, Materialspänen o.dgl. und schützt andererseits die Personen auf der Bedienerseite durch die durchschlagfeste oder bruchsichere Schutzplatte aus Kunststoff. Die Schutzplatte kann im Bedarfsfall eine durchsichtige Oberflächen- bzw. Zusatzschicht aufweisen - hierbei kann es sich um eine bedienerseitige abriebs- oder kratzbeständige Beschichtung oder Schutzfolie, oder um eine bedienerseitig aufgeklebte Glasscheibe mit hierauf aufgeklebter Splitterschutzfolie handeln. Die Schutzplatte kann auch eine zumindest teilweise vorgesehene durchsichtige flüssigkeits- und/oder gasdichte Schutzfolie oder -beschichtung haben.

Dabei ist es bekannt, die Glas- und Schutzplatten des Sicherheits-Verbundscheibenaufbaues mit koaxialen Durchbrüchen gleichen Durchmessers auszubilden und in diese Öffnung eine in sich geschlossene, länglich zylindrische Klarsichtscheibenanordnung mit einer um ihre Achse schnell drehbaren Klarsicht-Drehscheibe und einem Drehantrieb einzusetzen, wie eine solche gemäß der DE 35 32 362 A1. Die Drehscheibe gewährleistet durch ihre Rotation eine stets einwandfreie Durchsicht. Diese Klarsichtscheibenanordnung hat dabei gegenüber den Oberflächen des Verbundscheibenaufbaues maschinen- und bedienerseitige Überstände. Für viele Anwendungsfälle, wie im Bereich von Schiebetüren, sind solche Überstände zumindest maschinenseitig unerwünscht. Außerdem ist es hierbei nachteilig, daß die schützende bedienerseitige Schutzplatte einen ihre Stabilität und damit die Sicherheit stark beeinträchtigenden großen Durchbruch haben muß, dessen Durchmesser etwa demjenigen der Drehscheibe entspricht.

Es ist ferner bekannt, bei einem Sicherheits-Verbundscheibenaufbau in dessen Glas- und Schutzplatten keine Plattendurchbrüche vorzusehen und statt dessen maschinenseitig eine kurze zylindrische Klarsichtscheibenanordnung mit schnell drehbarer Klarsicht-Drehscheibe und Drehantrieb auf die Glasplatte aufzugeben, wie eine solche gemäß der EP 0 869 055 A2. Der wesentliche Nachteil dieser Anordnung besteht darin, daß hierbei die gesamte Klarsichtscheibenanordnung maschinenseitig übersteht und somit behindert.

Der vorliegenden Erfindung liegt daher die Aufgabe zugrunde, einen solchen Sicherheits-Verbundscheibenaufbau der genannten Art mit einer Klarsicht-Drehscheibe so auszubilden, daß unter Vermeidung der genannten Nachteile ein vielseitiger, behinderungsfreier und sicherer Betrieb gewährleistet ist.

Zur Lösung der gestellten Aufgabe zeichnet sich ein Verbundscheibenaufbau der im Oberbegriff von Anspruch 1 genannten Art erfindungsgemäß durch die im Kennzeichen dieses Anspruchs genannten Merkmale aus, nämlich dadurch, daß der Durchmesser der Drehscheibe geringfügig kleiner als der Durchmesser des Durchbruchs der Glasplatte ist, daß die Drehscheibe innerhalb des Durchbruchs der Glasplatte angeordnet ist, daß die von der Schutzplatte abweisenden Oberflächen der Drehscheibe und der Glasplatte miteinander fluchten, wobei der Spalt zwischen dem Rand der Drehscheibe und dem Durchbruch der Glasplatte innerhalb des Verbundscheibenaufbaus abgedichtet ist, und daß der Drehantrieb gänzlich oder im wesentlichen innerhalb des feststehenden Verbundscheibenaufbaues angeordnet ist.

Ein solcher Verbundscheibenaufbau hat durch seinen integrierten, kompakten Aufbau den wesentlichen Vorteil, daß er keinen hinderlichen maschinenseitigen Überstand aufweist und auch keinen die Sicherheit beeinträchtigenden, materialschwächenden, großen Durchbruch der Schutzplatte haben muß. Auch bedienerseitig kann ein Überstand völlig fehlen. Es ist somit ein vielfältiger Einsatzbereich bei großer Betriebssicherheit gewährleistet.

Die Ansprüche 2 und 3 beinhalten zweckmäßige weitere Ausgestaltungen eines zur Drehscheibe koaxial angeordneten motorischen Drehantriebs.

Die bevorzugten Merkmale von Anspruch 4 ermöglicht bei Aufrechterhaltung der bedienerseitigen Sicherheit eine zweckmäßige Unterbringung und Halterung des Drehantriebs, der an dieser Stelle als Elektromotor oder auch als Hydraulik- oder Pneumatikmotor ausgebildet sein kann. Durch den vergleichsweise kleinen Durchmesser des Durchbruchs für das Aufnahmeglied wird die Stabilität der Schutzplatte auch wegen der großflächigen beidseitigen Einspannung des Durchbruchs praktisch nicht geschwächt. Außerdem wird der Sichtbereich der Drehscheibe durch das Aufnahmeglied kaum beeinträchtigt.

Die weiteren Merkmale der Ansprüche 5 und 6 beinhalten eine einfache und betriebssichere Gestaltung des Aufnahmegliedes.

Die weitere Ausgestaltung gemäß den Ansprüchen 7 bis 9 ermöglichen einerseits eine zweckmäßige Halterung der Einzelteile des Drehantriebs und andererseits eine günstige Übertragung seines Drehmoments auf die Drehscheibe.

Im praktischen Betrieb hat sich gemäß Anspruch 10 eine berührungslos arbeitende Dichtung, wie eine Labyrinthdichtung, als vorteilhaft erwiesen. Dadurch werden reibungsbedingte Verluste, störende Geräusche und Abnutzungen vermieden. Für eine solche Dichtung eignet sich vor allem eine Ausbildung gemäß den Ansprüchen 11 und 12, weil der Aufbau besonders einfach, preiswert sowie zuverlässig und leicht zu warten ist. Diese Dichtungsteile können im Inneren des Verbundscheibenaufbaues sowie außerhalb des Spaltes zwischen der Drehscheibe und der Glasplatte angeordnet sein. Alternativ ist jedoch auch ein sehr kompakter Aufbau gemäß den Ansprüchen 13 und 14 möglich, bei dem sich die Dichtungsteile innerhalb des Spaltes zwischen der Drehscheibe und der Glasplatte befinden.

Die Weiterbildung von Anspruch 15 führt dazu, daß die bedienerseitig schützende Schutzplatte nicht von aggressiven Flüssigkeiten und/oder Gasen geschädigt und geschwächt werden kann, die von der Maschinenseite über die Dichtung, wie Labyrinthdichtung, in das Innere des Verbundscheibenaufbaues eindringen können.

Durch die Merkmale der Ansprüche 16 und 17 lassen sich die maschinenseitigen Glasoberflächen der Glasplatte und der Drehscheibe geeignet schützen, um einen dauerhaft sicheren Betrieb bei ständig guter Sichtfreiheit zu gewährleisten.

Die Ausgestaltung gemäß den Ansprüchen 18 und 19 ermöglicht einen sehr kompakten Aufbau, bei dem der hydraulische oder pneumatische Drehantrieb überhaupt nicht an der Schutzplatte, sondern an der Drehscheibe und nur düsenseitig am Verbundscheibenaufbau gehalten ist. Somit kann auch ein Durchbruch in der Schutzplatte vollständig entfallen.

Durch einen gemäß der Weiterbildung der Ansprüche 20 und 21 erzwungenen Luft- oder Gasstrom aus dem Inneren des Verbundscheibenaufbaues durch die berührungslos arbeitende Dichtung, wie Labyrinthdichtung, zur Maschinenseite werden die Sichtverhältnisse deutlich verbessert, weil dadurch eine Kondensatbildung, ein innenseitiges Beschlagen sowie ein Eindringen von maschinenseitigen Flüssigkeiten und Gasen verhindert wird.

Die alternative Anordnung des Drehantriebs gemäß Anspruch 22 kann besonders zweckmäßig sein, wenn kein zentraler Drehantrieb erwünscht ist. Auch ist es hierdurch möglich, ein besonders großes Sichtfeld im Bereich der Drehscheibe zu erhalten. Der Drehantrieb kann hierbei gemäß Anspruch 23 ausgebildet sein.

Der zweckmäßige Aufbau von Anspruch 24 ist zuverlässig und baulich einfach sowie preiswert. Dieses gilt insbesondere auch in Verbindung mit den Merkmalen der Ansprüche 25 und 26.

Die weitere Ausgestaltung gemäß den Ansprüchen 27 und 28 gewährleistet ein optimales freies Sichtfeld, da nur ein schmaler radialer Sichtstreifen durch den Haltearm und das Kraftübertragungsglied ausgenommen ist.

Eine Ausbildung nach Anspruch 29 ist besonders einfach, zuverlässig und preiswert.

Die Weiterbildung von Anspruch 30 ermöglicht einen besonders dünnen Verbundscheibenaufbau, weil hierbei die antreibenden und angetriebenen Räder sehr nahe an der Schutzplatte und der Drehantrieb vollständig im Inneren des Verbundscheibenaufbaues angeordnet sein können. Demgegenüber kann die Variante aus Anspruch 31 dann sinnvoll sein wenn beispielsweise ein größerer Drehantrieb bedienerseitig etwas durch die Schutzplatte nach außen ragen soll.

Die Ausgestaltung von Anspruch 32 hat sich im praktischen Betrieb besonders bewährt. Entsprechendes gilt auch für diejenige aus Anspruch 33.

Bei seitlicher Verlagerung des Drehantriebs kann das Getriebe gemäß Anspruch 34 auch als Zahnradgetriebe ausgebildet sein.

Eine Bauform gemäß den Ansprüchen 35 und 36 hat sich im praktischen Betrieb bewährt und führt wegen der in Richtung zur Maschinenseite zunehmenden Durchmesser der beiden Lager zu einer besonders großen Durchschlagfestigkeit sowie damit verbundenen Betriebssicherheit.

Die Erfindung wird nachfolgend an in den Zeichnungen schematisch dargestellten Ausführungsbeispielen näher erläutert. Es zeigen:
- Fig. 1: ein erstes Beispiel eines Verbundscheibenaufbaues nach der vorliegenden Erfindung mit einem zur Drehscheibe koaxial angeordneten Drehantrieb in einem schematischen Schnitt,
- Fig. 2: den Verbundscheibenaufbau aus Fig. 1 in einer schematischen Draufsicht,
- Fig. 3: den Verbundscheibenaufbau aus Fig. 1 in einem Teilschnitt seines Drehantriebs,
- Fig. 4: ein zweites Beispiel eines Verbundscheibenaufbaues nach der vorliegenden Erfindung mit einem zur Drehscheibe seitlich verlagerten Drehantrieb in einem schematischen Teilschnitt,
- Fig. 5: den Verbundscheibenaufbau aus Fig. 4 in einer schematischen Draufsicht, wobei der Drehantrieb an den Rand des Verbundscheibenaufbaues verlagert ist,
- Fig. 6: den Verbundscheibenaufbau aus Fig. 4 in einer schematischen Draufsicht, wobei der Drehantrieb an den Rand der Labyrinthdichtung verlagert ist, und
- Fig. 7: in einem Fig. 3 ähnelnden Teilschnitt einen alternativen hydraulischen oder pneumatischen Drehantrieb.

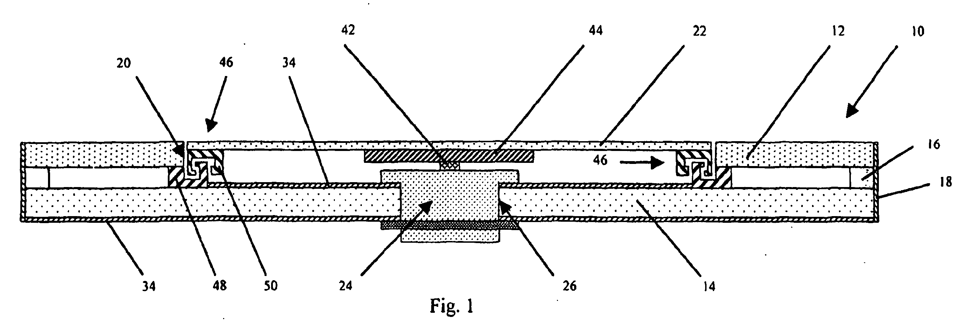

Gemäß dem ersten Beispiel aus den Fig. 1 bis 3 besteht ein Verbundscheibenaufbau 10 im vorliegenden Fall aus einer durchsichtigen Glasplatte 12 und einer hiervon durch eine Randverbindung 16 unter Abstand parallel gehaltenen durchschlagfesten bzw. bruchsicheren, durchsichtigen Schutzplatte 14, wie einer solchen aus Polycarbonat. Randseitig ist der Aufbau von einem Rahmen 18 oder einer Versiegelung umgeben. Im späteren Einbauzustand des Verbundscheibenaufbaues in einem Schutzgehäuse oder einer Schutztür einer Materialbearbeitungsmaschine sind die Glasplatte maschinenseitig und die dem Personenschutz dienende Schutzplatte bedienerseitig anzuordnen.

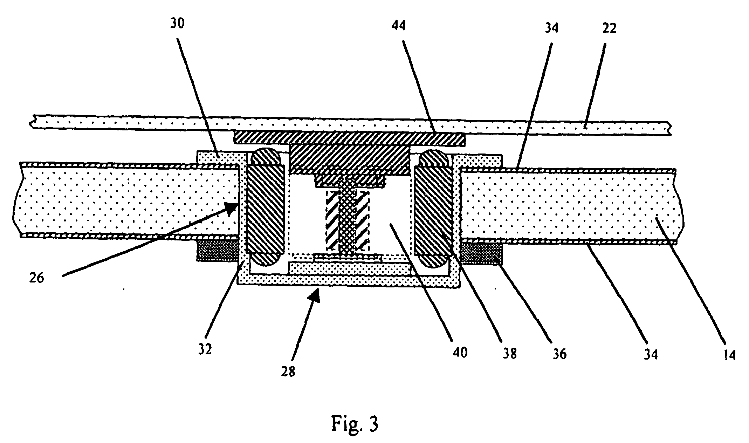

In der Glasplatte 12 befindet sich ein kreisrunder Durchbruch 20, in den mit relativ kleinem Spiel eine kreisrunde, aus durchsichtigem Glas bestehende Drehscheibe so eingesetzt ist, daß sich die maschinenseitigen Glasoberflächen der Glasplatte 12 und der Drehscheibe 22 etwa in einer Ebene befinden. Die Drehscheibe ist über eine an ihr befestigte Verbindungsscheibe 44 und über ein hieran angreifendes Antriebsglied 42, wie eine Antriebswelle, mit einem zur Drehscheibe koaxial angeordneten Drehantrieb 24 verbunden, der im vorliegenden Fall als Elektromotor ausgebildet ist und sich gemäß Fig. 3 in einem hutförmigen Aufnahmeglied 28 befindet. Dieses besteht im vorliegenden Fall aus einem durchschlagfesten oder bruchsicheren Metall und liegt mit seinem breit ausgeführten Hutrand 30 ringförmig großflächig auf einer flüssigkeits- und/oder gasdichten Schutzfolie oder -beschichtung 34 der Schutzplatte 14 auf.

Die Schutzfolie oder -beschichtung 34 bedeckt zumindest die dem Inneren des Verbundscheibenaufbaues 10 zugekehrten Flächen, die mit maschinenseitig in den Innenraum eindringenden Flüssigkeiten und/oder Gasen in Kontakt treten können. Hierdurch wird verhindert, daß die Stabilität der die Bedienerseite schützenden Schutzplatte 14 durch aggressive Flüssigkeiten und/oder Gase geschwächt wird. Im vorliegenden Fall sind vorsorglich auch die bedienerseitigen Oberflächen der Schutzplatte 14 entsprechend geschützt.

Ein topfförmiger Hutabschnitt 32 des Aufnahmegliedes 28 greift durch einen kreisrunden Durchbruch 26 der Schutzplatte 14 und ist an deren Außen- oder Bedienerseite mit einem breit ausgeführten Gewindering 36 verschraubt. Dieser liegt ringförmig großflächig auf einer äußeren flüssigkeits- und/oder gasdichten Schutzfolie oder -beschichtung 34 der Schutzplatte 14 auf.

Der Durchmesser des Durchbruchs 26 der Schutzplatte ist klein gegenüber dem Durchmesser der Drehscheibe 22 bzw. des Durchbruchs 20 der Glasplatte 12. Somit behindert der koaxiale Drehantrieb 24 nur wenig das Sichtfeld der Drehscheibe 22. Da der Durchbruch 26 von dem Hutrand 30 und dem Gewindering 36 großflächig ringförmig eingespannt ist, wird die Schutzplatte 14 mechanisch optimal geschützt.

Gemäß Fig. 3 befindet sich im Aufnahmeglied 28 ein Stator 38 des Drehantriebs 24. Ein im inneren des Stators 38 befindlicher Rotor 40 ist in nicht näher dargestellter Weise auf einer im Aufnahmeglied 28 stationär gehaltenen Rotorachse drehbar gelagert und über das Antriebsglied 42 mit der Verbindungsscheibe 44 an der Drehscheibe 22 verbunden.

Der Spalt zwischen dem Rand der Drehscheibe 22 und dem Durchbruch 20 der Glasplatte 12 ist durch eine berührungslos arbeitende ringförmige Dichtung 46, im vorliegenden Fall eine Labyrinthdichtung, abgedichtet. Die Dichtung 46 besteht aus einem feststehenden Dichtungsglied 48 und einem an der Innenseite der Drehscheibe 22 befestigten, wie angeklebten, mit der Drehscheibe mitdrehbaren Dichtungsglied 50. Die Dichtungsglieder 48, 50 greifen labyrinthartig ineinander. Das Dichtungsglied 48 ist im vorliegenden Fall zwischen der Glasplatte 12 und der Schutzplatte 14 gehalten.

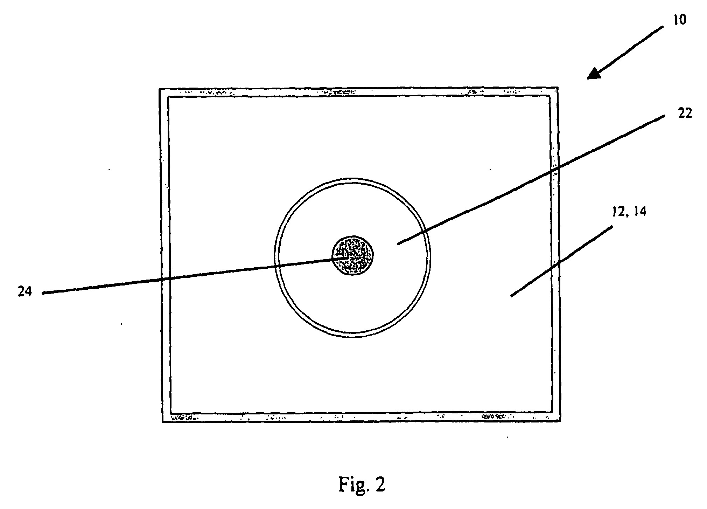

Aus Fig. 2 ist ersichtlich, daß das großflächige Sichtfeld des Verbundscheibenaufbaues und der Drehscheibe 22 durch den koaxial angeordneten Drehantrieb 24 nur unwesentlich beeinträchtigt ist.

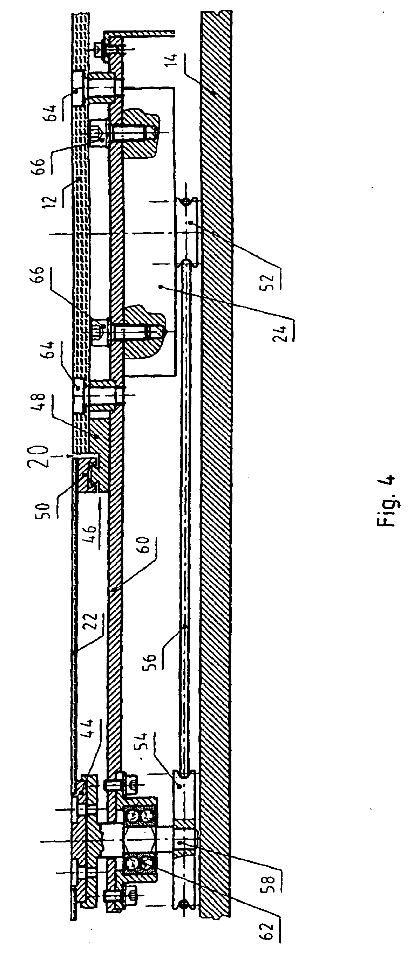

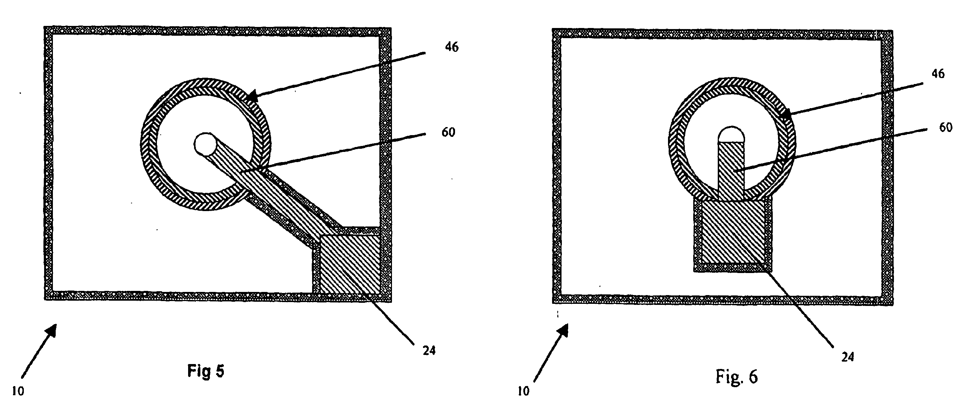

Das zweite Beispiel aus den Fig. 4 bis 6 unterscheidet sich von dem ersten Beispiel aus den Figuren 1 bis 3 im wesentlichen dadurch, daß der Drehantrieb 24 aus dem Sichtbereich der Drehscheibe 22 seitlich verlagert angeordnet und mit der Drehscheibe 22 über ein Getriebe gekoppelt ist. Diese seitliche Verlagerung kann gemäß Fig. 5 an den Rand des Verbundscheibenaufbaues 10 oder gemäß Fig. 6 an den Rand der Dichtung 46, wie Labyrinthdichtung, erfolgen.

Gemäß Fig. 4 ist der seitlich verlagerte und im vorliegenden Fall vollständig im Inneren des Verbundscheibenaufbaues 10 angeordnete Drehantrieb 24 mit einem antreibenden Rad 52, wie einem Riemenrad, als erstem Getriebeteil verbunden. Ein zur Drehscheibe 22 koaxiales angetriebenes Rad 54, wie ein Riemenrad, befindet sich als zweites Getriebeteil in der Ebene des antreibenden Rades 52 und ist mit diesem über ein endloses Kraftübertragungsglied 56, wie einen Antriebsriemen, als drittes Getriebeteil gekoppelt. Das angetriebene Rad 54 ist über eine Verbindungswelle 58 mit der Verbindungsscheibe 44 an der Drehscheibe 22 gekoppelt. Die Verbindungswelle 58 ist über ein Lager 62 an einem in Blickrichtung des Bedieners schmalen Haltearm 60 im Inneren des Verbundscheibenaufbaues 10 gehalten. Der Haltearm 60 ist außerhalb des Sichtbereichs der Drehscheibe 22 über Schrauben 64 an der Glasplatte 12 befestigt. Der Drehantrieb 24 ist über Schrauben 66 an dem Haltearm 60 festgelegt.

Gemäß den Fig. 5 und 6 überdecken sich der schmale Haltearm 60 und das Kraftübertragungsglied 56 in Blickrichtung des Bedieners, so daß nur ein schmaler Sichtbereich der Drehscheibe 22 entfällt.

Gemäß Fig. 4 ist die Drehscheibe 22 wie bei dem ersten Beispiel in einem Durchbruch der Glasplatte 12 so angeordnet, daß die maschinenseitigen Glasoberflächen im wesentlichen fluchten. Das feststehende Dichtungsglied 48 der wie beim ersten Beispiel als Labyrinthdichtung ausgebildeten Dichtung 46 ist an der Innenseite der Glasplatte 12 befestigt, wie angeklebt, während das mit der Drehscheibe 22 mitdrehbare Dichtungsglied 50 an deren Innenseite befestigt, wie angeklebt, ist.

Bei dem zweiten Beispiel hat die Schutzplatte 14, die wie beim ersten Beispiel ebenfalls eine flüssigkeits- und/oder gasdichte Schutzfolie oder -beschichtung (nicht dargestellt) haben kann, im Unterschied zum ersten Beispiel mit dem hutförmigen Aufnahmeglied 28 überhaupt keinen Durchbruch. Somit ist deren Stabilität im gesamten Bereich ungeschwächt. Es ist jedoch alternativ möglich, den Drehantrieb 24 gegenüber Fig. 4 um 180 Grad zu drehen und in nicht dargestellter Weise durch einen Durchbruch der Schutzplatte zur Bedienerseite ragen zu lassen. Diese Variante kann beispielsweise dann sinnvoll sein, wenn der Drehantrieb relativ groß ist und nicht in das Innere des Verbundscheibenaufbaues paßt.

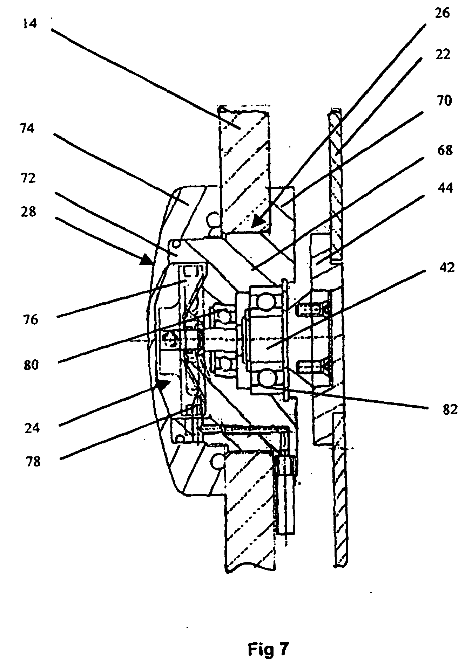

Elektrische und/oder hydraulische bzw. pneumatische Versorgungsleitungen können im Inneren des Verbundscheibenaufbaues verlegt sein. Die erforderlichen Steuerungselemente können außerhalb des Sichtfeldes der Drehscheibe 22 angeordnet sein - beispielsweise gemäß den Figuren 5 und 6 im Bereich des seitlich verlagerten Drehantriebs.
Gemäß einer alternativen - Fig. 3 ähnelnden - Bauform aus Fig. 7 greift ein Grundglied 68 eines zur Halterung eines hydraulischen oder pneumatischen Drehantriebs 24 dienenden Aufnahmegliedes 28 mit einem mit Außengewinde versehenen zylindrischen Vorsprung 72 geringfügig durch den Durchbruch 26 der Schutzplatte 14, wo der Vorsprung 72 mit einem sich großflächig an der Schutzplatte 14 abstützenden Gewindedeckel 74 des Aufnahmegliedes 28 verschraubt ist. Das Grundglied 68 liegt mit einem Rand 70 innenseitig großflächig auf der Schutzplatte 14 auf.
Innerhalb des Vorsprungs 72 befindet sich ein drehbares hydraulisches oder pneumatisches Schaufelrad 76, das mit einem mit der Drehscheibe 22 über eine Verbindungsscheibe 44 verbundenen Antriebsglied 42 in Form einer bezüglich ihres Durchmessers einfach abgestuften Antriebswelle verbunden ist. Der abgestufte Durchmesser nimmt in Richtung zur Drehscheibe 22 zu. In den beiden Durchmesserbereichen befindet sich jeweils ein Lager 80 bzw. 82. Die in Richtung zur Drehscheibe 22 größer werdenden Lager 80, 82 sind außen in entsprechend abgestuften Vertiefungen des Grundgliedes 68 gehalten. Dem peripheren Rand des Schaufelrades 76 ist eine am Grundglied 68 gehaltene hydraulische oder pneumatische Düse 78 zugeordnet, die über eine entsprechende Versorgungsleitung im Inneren des Verbundscheibenaufbaues mit Antriebsfluid versorgt wird.
Diese Bauform aus Fig. 7 hat sich im praktischen Betrieb gut bewährt und führt wegen der besonderen Lagerung der Antriebswelle zu einer großen Betriebssicherheit, weil die beiden Stufen dafür sorgen, daß eine mittige Aufprallenergie großflächiger im Aufnahmeglied 28 verteilt wird.

## Patentansprüche

1. Verbundscheibenaufbau als Sicherheitssichtfenster für Schutzgehäuse und -türen von Materialbearbeitungsmaschinen, wie schleifenden oder spanabhebenden Maschinen, mit einer feststehenden, durchsichtigen, maschinenseitigen Glasplatte und einer hiermit randseitig verbundenen, feststehenden, durchsichtigen, durchschlagfesten oder bruchsicheren, bedienerseitigen Schutzplatte aus Kunststoff, wie einer solchen aus Polycarbonat, ohne oder mit wenigstens einer Oberflächenschicht, wobei die Glasplatte einen kreisrunden Durchbruch aufweist, der von einer kreisrunden durchsichtigen Klarsicht-Drehscheibe überdeckt ist, die aus Glas ohne oder mit aufgeklebter, zur Bedienerseite weisender Kunststoffscheibe besteht und an ihrer zur Schutzplatte weisenden Seite mit einem Drehantrieb verbunden ist,
**dadurch gekennzeichnet,**
**daß** der Durchmesser der Drehscheibe (22) geringfügig kleiner als der Durchmesser des Durchbruchs (20) der Glasplatte (12) ist,
**daß** die Drehscheibe (22) innerhalb des Durchbruchs (20) der Glasplatte (12) angeordnet ist,
**daß** die von der Schutzplatte (14) abweisenden Oberflächen der Drehscheibe (22) und der Glasplatte (12) miteinander fluchten, wobei der Spalt zwischen dem Rand der Drehscheibe (22) und dem Durchbruch (20) der Glasplatte (12) innerhalb des Verbundscheibenaufbaus abgedichtet ist,
und **daß** der Drehantrieb (24) gänzlich oder im wesentlichen innerhalb des feststehenden Verbundscheibenaufbaues angeordnet ist.

2. Verbundscheibenaufbau nach Anspruch 1, **dadurch gekennzeichnet, daß** der Drehantrieb (24) als zur Drehscheibe (22) koaxial angeordneter Elektromotor ausgebildet und an der Schutzplatte (14) gehalten ist.

3. Verbundscheibenaufbau nach Anspruch 1, **dadurch gekennzeichnet, daß** der Drehantrieb (24) als zur Drehscheibe (22) koaxial angeordneter Hydraulik- oder Pneumatikmotor ausgebildet und an der Schutzplatte (14) oder an der Drehscheibe (22) und am Verbundscheibenaufbau gehalten ist.

4. Verbundscheibenaufbau nach einem der Ansprüche 1 bis 3, **dadurch gekennzeichnet, daß** die Schutzplatte (14) einen zumindest weitgehend kreisrunden Durchbruch (26) aufweist, der koaxial zum Durchbruch (20) der Glasplatte (12) angeordnet ist und dessen Durchmesser klein gegenüber dem Durchmesser des Durchbruchs (20) der Glasplatte (12) ist, und daß in dem Durchbruch (26) der Schutzplatte (14) ein mit dieser lösbar sowie abgedichtet verbindbares, aus durchschlagfestem oder bruchsicheren Material bestehendes sowie als Halterung für den Drehantrieb (24) dienendes Aufnahmeglied (28) angeordnet ist, dessen Innenraum zum Inneren des Verbundscheibenaufbaues weist.

5. Verbundscheibenaufbau nach Anspruch 4, **dadurch gekennzeichnet, daß** das Aufnahmeglied (28) hutförmig ausgebildet ist, daß der breit ausgeführte Hutrand (30) des Aufnahmegliedes (28) großflächig auf der Innenseite der Schutzplatte (14) oder auf einer diese abdeckenden flüssigkeits- und/oder gasdichten Schutzfolie oder -beschichtung (34) aufliegt und daß der Hutabschnitt (32) des Aufnahmegliedes (28) geringfügig durch den Durchbruch (26) der Schutzplatte (14) greift und an deren Außenseite mit einem breiten äußeren Gewindering (36) lösbar verschraubt ist, der im verspannten Funktionszustand großflächig fest auf der Außenseite der Schutzplatte (14) oder auf einer diese abdeckenden flüssigkeits- und/oder gasdichten Schutzfolie oder -beschichtung (34) aufliegt.

6. Verbundscheibenaufbau nach Anspruch 4 oder 5, **dadurch gekennzeichnet, daß** das Aufnahmeglied (28) aus Metall oder schlagfestem Kunststoff besteht.

7. Verbundscheibenaufbau nach einem der Ansprüche 4 bis 6, **dadurch gekennzeichnet, daß** im Inneren des Aufnahmegliedes (28) ein radial äußerer Stator (38) sowie darin ein radial innerer Rotor (40) eines als Elektromotor ausgebildeten Drehantriebs (24) angeordnet sind und daß der Rotor (40) über ein Antriebsglied (42), wie eine Antriebswelle, mit der Drehscheibe (22) verbunden ist.

8. Verbundscheibenaufbau nach Anspruch 7, **dadurch gekennzeichnet, daß** der Rotor (40) auf einer im Aufnahmeglied (28) gehaltenen stationären Rotorachse drehbar gelagert ist.

9. Verbundscheibenaufbau nach einem der Ansprüche 1 bis 8, **dadurch gekennzeichnet, daß** ein Antriebsglied (42) des Drehantriebs (24) mit einer mit der Drehscheibe (22) fest verbundenen zentrischen Verbindungsscheibe (44) verbunden ist.

10. Verbundscheibenaufbau nach einem der Ansprüche 1 bis 9, **dadurch gekennzeichnet, daß** die Abdichtung zwischen dem Rand der Drehscheibe (22) und dem Durchbruch (20) der Glasplatte (12) als eine innerhalb des Verbundscheibenaufbaues angeordnete berührungslose Dichtung, wie als eine Labyrinthdichtung (46), ausgebildet ist.

11. Verbundscheibenaufbau nach Anspruch 10, **dadurch gekennzeichnet, daß** die Dichtung als Labyrinthdichtung (46) zweiteilig ausgebildet ist und ein ringförmiges feststehendes Dichtungsglied (48) sowie ein hiermit in berührungslosem Dichtungseingriff befindliches, mit der Drehscheibe (22) verbundenes und mit dieser mitdrehbares Dichtungsglied (50) aufweist.

12. Verbundscheibenaufbau nach Anspruch 11, **dadurch gekennzeichnet, daß** die Glasplatte (12) und die Schutzplatte (14) über eine äußere Randverbindung (16) einen gegenseitigen Abstand haben und daß das feststehende Dichtungsglied (48) im Bereich des Durchbruchs (20) zwischen der Glasplatte (12) und der Schutzplatte (14) oder einer diese innenseitig abdeckenden flüssigkeits- und/oder gasdichten Schutzfolie oder -beschichtung (34) gehalten ist.

13. Verbundscheibenaufbau nach Anspruch 10, **dadurch gekennzeichnet, daß** der Durchbruch (20) der Glasplatte (12) innenseitig einen durchmesserverjüngten, ringförmigen Absatz aufweist und daß sich die Labyrinthdichtung (46) zwischen diesem und der Drehscheibe (22) befindet.

14. Verbundscheibenaufbau nach Anspruch 13, **dadurch gekennzeichnet, daß** die Labyrinthdichtung (46) aus ineinandergreifenden Glasprofilen der Glasplatte (12) und der Drehscheibe (22) oder aus ineinandergreifenden, auf die Glasplatte (12) und die Drehscheibe (22) aufgesetzten Metall- oder Kunststoffteilen besteht.

15. Verbundscheibenaufbau nach einem der Ansprüche 1 bis 14, **dadurch gekennzeichnet, daß** zumindest alle Bereiche der Schutzplatte (14), die im Inneren des Verbundscheibenaufbaues in Verbindung mit der Labyrinthdichtung (46) stehen, von einer flüssigkeits- und/oder gasdichten Schutzfolie oder -beschichtung (34) abgedeckt sind.

16. Verbundscheibenaufbau nach einem der Ansprüche 1 bis 15, **dadurch gekennzeichnet, daß** die Drehscheibe (22) an ihrer von der Schutzplatte (14) abweisenden Seite eine flüssigkeitsabweisende und/oder hitzeschützende Beschichtung aufweist, wie eine Lotusbeschichtung oder eine Beschichtung im Nanobereich.

17. Verbundscheibenaufbau nach einem der Ansprüche 1 bis 16, **dadurch gekennzeichnet, daß** die Glasplatte (12) an ihrer von der Schutzplatte (14) abweisenden Seite eine flüssigkeitsabweisende und/oder hitzeschützende Beschichtung aufweist, wie eine Lotusbeschichtung oder eine Beschichtung im Nanobereich.

18. Verbundscheibenaufbau nach einem der Ansprüche 1 bis 17, **dadurch gekennzeichnet, daß** der als Hydraulik- oder Pneumatikmotor ausgebildete Drehantrieb (24) ein an der Drehscheibe (22) befestigtes oder hiermit verbundenes und mit einem Hydraulik- oder Pneumatikstrom beaufschlagbares Antriebsschaufelelement und eine diesem zugeordnete, am Verbundscheibenaufbau gehaltene pneumatische oder hydraulische Düse aufweist.

19. Verbundscheibenaufbau nach Anspruch 18, **dadurch gekennzeichnet, daß** das Antriebsschaufelelement ringförmig mit mehreren Antriebsschaufeln ausgebildet und an der Innenseite der Drehscheibe (22) koaxial gehalten ist.

20. Verbundscheibenaufbau nach einem der Ansprüche 1 bis 19, **gekennzeichnet durch** ein Mittel zum Erzeugen eines Luft- oder Gasstroms aus dem Inneren des Verbundscheibenaufbaues **durch** die Dichtung (46) zwischen der Drehscheibe (22) und der Glasplatte (12).

21. Verbundscheibenaufbau nach Anspruch 20, **dadurch gekennzeichnet, daß** das Mittel zum Erzeugen eines Luft- oder Gasstroms als ein mit der Drehscheibe (22) mitdrehbarer Schaufelring und ein Lufteinlaß in das Innere des Verbundscheibenaufbaues ausgebildet ist.

22. Verbundscheibenaufbau nach einem der Ansprüche 1 bis 21, **dadurch gekennzeichnet, daß** der Drehantrieb (24) aus dem Sichtfeld der Drehscheibe (22) seitlich verlagert und mit der Drehscheibe (22) über ein Getriebe (52, 54, 56) gekoppelt ist.

23. Verbundscheibenaufbau nach Anspruch 22, **dadurch gekennzeichnet, daß** der Drehantrieb (24) als Elektromotor oder als Hydraulik- oder Pneumatikmotor ausgebildet ist.

24. Verbundscheibenaufbau nach Anspruch 22 oder 23, **dadurch gekennzeichnet, daß** das Getriebe ein mit dem Drehantrieb (24) koaxial verbundenes antreibendes Rad (52), ferner ein mit der Drehscheibe (22) an ihrer zu der Schutzplatte (14) weisenden Seite koaxial verbundenes angetriebenes Rad (54) und ein endloses Kraftübertragungselement (56) aufweist, das die innerhalb des feststehenden Verbundscheibenaufbaues in einer Ebene liegenden beiden Räder (52, 54) miteinander verbindet.

25. Verbundscheibenaufbau nach Anspruch 24, **dadurch gekennzeichnet, daß** eine das angetriebene Rad (54) mit der Drehscheibe (22) koppelnde Verbindungswelle (58) im Inneren des Verbundscheibenaufbaues gelagert ist.

26. Verbundscheibenaufbau nach Anspruch 25, **dadurch gekennzeichnet, daß** die Verbindungswelle (58) mit einer mit der Drehscheibe (22) fest verbundenen zentrischen Verbindungsscheibe (44) verbunden ist.

27. Verbundscheibenaufbau nach Anspruch 25 oder 26, **dadurch gekennzeichnet, daß** die Verbindungswelle (58) über ein Lager (62) an einem schmalen Haltearm (60) gelagert ist, der außerhalb des Sichtfeldes der Drehscheibe (22) mit dem Verbundscheibenaufbau verbunden ist.

28. Verbundscheibenaufbau nach Anspruch 27, **dadurch gekennzeichnet, daß** der Haltearm (60) und das Kraftübertragungsglied (56) sich in Blickrichtung gegenseitig überdeckend angeordnet sind.

29. Verbundscheibenaufbau nach einem der Ansprüche 24 bis 28, **dadurch gekennzeichnet, daß** die beiden Räder (52, 54) als Riemen- oder Zahnräder und das Kraftübertragungselement (56) als Riemen oder Kette ausgebildet sind.

30. Verbundscheibenaufbau nach einem der Ansprüche 24 bis 29, **dadurch gekennzeichnet, daß** der Drehantrieb (24) und die Drehscheibe (22) an derselben Seite der antreibenden und angetriebenen Räder (52, 54) angeordnet sind.

31. Verbundscheibenaufbau nach einem der Ansprüche 24 bis 29, **dadurch gekennzeichnet, daß** der Drehantrieb (24) und die Drehscheibe (22) an entgegengesetzten Seiten der antreibenden und angetriebenen Räder (52, 54) angeordnet sind.

32. Verbundscheibenaufbau nach einem der Ansprüche 27 bis 31, **dadurch gekennzeichnet, daß** der Haltearm (60) an der Glasscheibe (12) und der Drehantrieb (24) am Haltearm (60) befestigt sind.

33. Verbundscheibenaufbau nach einem der Ansprüche 22 bis 32, **dadurch gekennzeichnet, daß** der Drehantrieb (24) aus dem Sichtfeld der Drehscheibe (22) an den Rand des Verbundscheibenaufbaues oder der Labyrinthdichtung (46) seitlich verlagert ist.

34. Verbundscheibenaufbau nach einem der Ansprüche 22 bis 33, **dadurch gekennzeichnet, daß** das Getriebe als Zahnradgetriebe, wie Kegelradgetriebe, ausgebildet ist.

35. Verbundscheibenaufbau nach Anspruch 4, **dadurch gekennzeichnet, daß** das Aufnahmeglied (28) ein Grundglied (68) aufweist, das mit einem breit ausgeführten ringförmigen Rand (70) großflächig auf der Innenseite der Schutzplatte (14) oder auf einer diese abdeckenden flüssigkeits- und/oder gasdichten Schutzfolie oder - beschichtung (34) aufliegt und daß das Grundglied (68) mit einem mit Außengewinde versehenen zylindrischen Vorsprung (72) geringfügig durch den Durchbruch (26) der Schutzplatte (14) greift und an deren Außenseite mit einem äußeren Gewindedeckel (74) lösbar verschraubt ist, der im verspannten Funktionszustand randseitig großflächig fest auf der Außenseite der Schutzplatte (14) oder auf einer diese abdeckenden flüssigkeits- und/oder gasdichten Schutzfolie oder -beschichtung aufliegt.

36. Verbundscheibenaufbau nach Anspruch 35, **dadurch gekennzeichnet, daß** ein innerhalb des Vorsprungs (72) angeordnetes hydraulisches oder pneumatisches Schaufelrad (76), dessem peripheren Rand eine am Grundglied (68) gehaltene hydraulische oder pneumatische Düse (78) zugeordnet ist, über ein Antriebsglied (42) mit der Drehscheibe (22) verbunden ist, das als zumindest einfach abgestufte Antriebswelle ausgebildet ist, deren Durchmesser in Richtung zur Drehscheibe (22) zunimmt, und daß das Antriebsglied (42) über zwei radial innen und außen unterschiedlich große, den abgestuften Durchmesserbereichen zugeordnete Lager (80, 82) in dem Grundglied (68) drehbar gelagert ist.

## Claims

1. Glazing assembly as a safety viewing window for protective housings and protective doors of material processing machines such as polishing or cutting machines, comprising a fixed; transparent glass pane on the side of the machine and a fixed, transparent, impenetrable or unbreakable protective pane on the side of the operator, which protective plane is made of plastics material, such as a protective pane made of polycarbonate, and is connected to the edge of said glass pane, without or with at least one surface layer, the glass pane comprising a circular opening, which is covered by a circular, transparent, clear, rotatable panel, which is made of glass with or without a glued-on plastics material panel pointing toward the operator side and connected to a rotary drive mechanism at its side pointing toward the protective pane, **characterised in that** the diameter of the rotatable panel (22) is slightly smaller than the diameter of the opening (20) in the glass pane (12), **in that** the rotatable panel (22) is arranged within the opening (20) in the glass pane (12), **in that** the surfaces of the rotatable panel (22) and the glass pane (12) pointing away from the protective pane (14) are in alignment with one another, the gap between the edge of the rotatable panel (22) and the opening (20) in the glass pane (12) within the glazing assembly being sealed, and **in that** the rotary drive mechanism (24) is completely or substantially arranged within the fixed glazing assembly.

2. Glazing assembly according to claim 1, **characterised in that** the rotary drive mechanism (24) is configured as an electric motor arranged coaxially to the rotatable panel (22) and is supported on the protective pane (14).

3. Glazing assembly according to claim 1, **characterised in that** the rotary drive mechanism (24) is configured as a hydraulic or pneumatic motor arranged coaxially relative to the rotatable panel (22) and is supported on the protective pane (14) or on the rotatable panel (22) and on the glazing assembly.

4. Glazing assembly according to any one of claims 1 to 3, **characterised in that** the protective pane (14) comprises a substantially circular opening (26), which is arranged coaxially relative to the opening (20) in the glass pane (12) and the diameter of which is small compared to the diameter of the opening (20) in the glass pane (12), and **in that** a receiving element (28), the interior of which points toward the interior of the glazing assembly and which is made of a impenetrable or unbreakable material, is arranged in the opening (26) in the protective pane (14) and may be releasably connected in a sealed manner to the protective pane and is used as a support for the rotary drive mechanism (24).

5. Glazing assembly according to claim 4, **characterised in that** the receiving element (28) is hat-shaped, **in that** the wide hat rim (30) of the receiving element (28) overlies a large surface area on the inside of the protective pane (14) or on a liquid and/or gas-tight protective film or coating (34) covering said inside of the protective pane, and **in that** the hat portion (32) of the receiving element (28) extends slightly through the opening (26) in the protective pane (14) and is releasably screwed on the outside of the protective pane to a wide, outer threaded ring (36) which, in the fastened functioning state, tightly overlies a large surface area on the outside of the protective pane (14) or a liquid and/or gas-tight protective film or coating (34) covering said protective pane.

6. Glazing assembly according to either claim 4 or claim 5, **characterised in that** the receiving element (28) consists of metal or impact-proof plastics material.

7. Glazing assembly according to any one of claims 4 to 6, **characterised in that** a radially outer stator (38) and a radially inner rotor (40), which is disposed within said stator, of a rotary drive mechanism (24) configured as an electric motor are arranged in the interior of the receiving element (28), and **in that** the rotor (40) is connected to the rotatable panel (22) via a drive element (42) such as a drive shaft.

8. Glazing assembly according to claim 7, **characterised in that** the rotor (40) is rotatably mounted on a stationary rotor axle which is supported in the receiving element (28).

9. Glazing assembly according to any one of claims 1 to 8, **characterised in that** a drive element (42) of the rotary drive mechanism (24) is connected to a central connection panel (44) which is rigidly connected to the rotatable panel (22).

10. Glazing assembly according to any one of claims 1 to 9, **characterised in that** the seal between the edge of the rotatable panel (22) and the opening (20) in the glass pane (12) is configured as a contactless seal, such as a labyrinth seal (46), arranged within the glazing assembly.

11. Glazing assembly according to claim 10, **characterised in that** the seal is a two-part labyrinth seal (46) and comprises an annular, fixed sealing element (48) and a sealing element (50), which is in contactless sealing engagement with the fixed sealing element and which is connected to the rotatable panel (22) and may rotate jointly therewith.

12. Glazing assembly according to claim 11, **characterised in that** the glass pane (12) and the protective pane (14) have a mutual distance over an outer edge connection (16), and **in that** the fixed sealing element (48) is supported in the region of the opening (20) between the glass pane (12) and the protective pane (14) or a liquid and/or gas-tight protective film or coating (34) covering said protective pane on the inside.

13. Glazing assembly according to claim 10, **characterised in that** the opening (20) in the glass pane (12) comprises on the inside an annular shoulder with a tapering diameter, and **in that** said labyrinth seal (46) is located between this shoulder and the rotatable panel (22).

14. Glazing assembly according to claim 13, **characterised in that** the labyrinth seal (46) consists of meshing glass profiles of the glass pane (12) and of the rotatable panel (22), or of meshing metal or plastics material parts placed onto the glass pane (12) and the rotatable panel (22).

15. Glazing assembly according to any one of claims 1 to 14, **characterised in that** at least all of the regions of the protective pane (14) that are connected to the labyrinth seal (46) inside the glazing assembly, are covered by a liquid and/or gas-tight protective film or coating (34).

16. Glazing assembly according to any one of claims 1 to 15, **characterised in that** the rotatable panel (22), on its side pointing away from the protective pane (14), has a liquid-repellent and/or heat-protective coating, such as a coating with a lotus effect or a coating in the nano range.

17. Glazing assembly according to any one of claims 1 to 16, **characterised in that** the glass pane (12), on its side pointing away from the protective pane (14), has a liquid-repellent and/or heat-protective coating, such as a coating with a lotus effect or a coating in the nano range.

18. Glazing assembly according to any one of claims 1 to 17, **characterised in that** the rotary drive mechanism (24), which is configured as a hydraulic or pneumatic motor, comprises a drive blade element, which is fastened to the rotatable panel (22) and may be acted on by a hydraulic or pneumatic current, and a pneumatic or hydraulic nozzle associated with said blade element and supported on the glazing assembly.

19. Glazing assembly according to claim 18, **characterised in that** the drive blade element is annular and comprises a plurality of drive blades, and is supported coaxially on the inside of the rotatable panel (22).

20. Glazing assembly according to any one of claims 1 to 19, **characterised by** a means for generating an air or gas stream out of the interior of the glazing assembly through the seal (46) between the rotatable panel (22) and the glass pane (12).

21. Glazing assembly according to claim 20, **characterised in that** the means for generating an air or gas stream is configured as a blade ring, which is rotatable jointly with the rotatable panel (22), and an air inlet into the interior of the glazing assembly.

22. Glazing assembly according to any one of claims 1 to 21, **characterised in that** the rotary drive mechanism (24) is positioned laterally, from the perspective of the rotatable panel (22), and is coupled to the rotatable panel (22) via a transmission (52, 54, 56).

23. Glazing assembly according to claim 22, **characterised in that** the rotary drive mechanism (24) is an electric motor, a hydraulic motor or a pneumatic motor.

24. Glazing assembly according to either claim 22 or claim 23, **characterised in that** the transmission comprises a driving wheel (52) connected coaxially to the rotary drive mechanism (24), and a driven wheel (54) connected coaxially to the rotatable panel (22) on its side pointing toward the protective pane (14), and a continuous force transmission element (56) which connects the two wheels (52, 54), which are located in one plane inside the fixed glazing assembly, to one another.

25. Glazing assembly according to claim 24, **characterised in that** a connection shaft (58) coupling the driven wheel (54) to the rotatable panel (22) is supported in the interior of the glazing assembly.

26. Glazing assembly according to claim 25, **characterised in that** the connection shaft (58) is connected to a central connection panel (44) which is rigidly connected to the rotatable panel (22).

27. Glazing assembly according to according to either claim 25 or claim 26, **characterised in that** the connection shaft (58) is supported, via a bearing (62), on a narrow supporting arm (60) which is connected to the glazing assembly outside the perspective of the rotatable panel (22).

28. Glazing assembly according to claim 27, **characterised in that** the supporting arm (60) and the force transmission element (56) are disposed so that they mutually overlap when seen along a viewing direction.

29. Glazing assembly according to any one of claims 24 to 28, **characterised in that** the two wheels (52, 54) are pulleys or gear-wheels and the force transmission element (56) is a belt or chain.

30. Glazing assembly according to any one of claims 24 to 29, **characterised in that** the rotary drive mechanism (24) and the rotatable panel (22) are disposed on the same side of the driving and driven wheels (52, 54).

31. Glazing assembly according to according to any one of claims 24 to 29, **characterised in that** the rotary drive mechanism (24) and the rotatable panel (22) are disposed on opposite sides of the driving and driven wheels (52, 54).

32. Glazing assembly according to any one of claims 27 to 31, **characterised in that** the supporting arm (60) is attached to the glass pane (12), and the rotary drive mechanism (24) is attached to the supporting arm (60).

33. Glazing assembly according to any one of claims 22 to 32, **characterised in that** from the perspective of the rotatable panel (22), the rotary drive mechanism (24) is positioned laterally of the edge of the glazing assembly or the labyrinth seal (46).

34. Glazing assembly according to any one of claims 22 to 33, **characterised in that** the transmission is a gear mechanism such as a bevel gear.

35. Glazing assembly according to claim 4, **characterised in that** the receiving element (28) comprises a body element (68) having a wide annular rim (70) overlying a large surface area on the inside of the protective pane (14) or a liquid and/or gas-tight protective film or coating (34) covering said inside of the protective pane, and **in that** a cylindrical projection (72), provided with a male thread, of the body element (68) extends slightly through the opening (26) in the protective pane (14) and is releasably screwed on the outside of the protective pane to an outer threaded cap (74) which, in the fastened functioning state, tightly overlies, at the edge, a large surface area or the outside of the protective pane (14) or on a liquid and/or gas-tight protective film or coating (34) covering said protective pane.

36. Glazing assembly according to claim 35, **characterised in that** a hydraulic or pneumatic blade wheel (76), which is arranged inside the projection (72) and the peripheral edge of which is associated with a hydraulic or pneumatic nozzle (78) supported on the body element (68), is connected to the rotatable panel (22) via a drive element (42), which is an at least singly stepped drive shaft, the diameter of which increases in the direction toward the rotatable panel (22), and **in that** the drive element (42) is rotatably mounted in the body element (68) via two bearings (80, 82) which have different radially inner and outer sizes and which are associated with the stepped diameter regions.

## Revendications

1. ensemble de vitrage composite en tant que fenêtre de sécurité pour des carters et portes de protection de machines de traitement de matériaux, telles que des machines à abrasion ou à enlèvement de copeaux, comprenant une plaque de verre stationnaire transparente du côté machine et une plaque de protection en matière plastique, telle qu'une plaque en polycarbonate, stationnaire, transparente, résistante au claquage ou résistante à la rupture, sans ou avec au moins une couche superficielle, reliée à la précédente par son bord, du côté opérateur, la plaque de verre présentant une percée circulaire recouverte d'un disque rotatif antibuée transparent circulaire, qui est constitué de verre sans ou avec un disque de matière plastique collé tourné vers le côté opérateur, et est relié à une commande de rotation sur son côté tourné vers la plaque de protection,
**caractérisé en ce**
**que** le diamètre du disque rotatif (22) est légèrement inférieur au diamètre de la percée (20) de la plaque de verre (12),
**que** le disque rotatif (22) est disposé à l'intérieur de la percée (20) de la plaque de verre (12),
**que** les surfaces du disque relatif (22) et de la plaque de verre (12) opposées à la plaque de protection (14) sont mutuellement alignées, l'interstice entre le bord du disque rotatif (22) et la percée (20) de la plaque de verre (12) étant étanchéifié à l'intérieur de l'ensemble de vitrage composite,
et **que** la commande de rotation (24) est disposée totalement ou essentiellement à l'intérieur de l'ensemble de vitrage composite stationnaire.

2. Ensemble de vitrage composite suivant la revendication 1, **caractérisé en ce que** la commande de relation (24) est réalisée sous forme de moteur électrique coaxial au disque rotatif (22) et est fixée à la plaque de protection (14).

3. Ensemble de vitrage composite suivant la revendication 1, **caractérisé en ce que** la commande de rotation (24) est réalisée sous forme de moteur hydraulique ou pneumatique coaxial au disque rotatif (22) et est fixée à la plaque de protection (14) ou sur le disque rotatif (22) et sur l'ensemble de vitrage composite.

4. Ensemble de vitrage composite suivant l'une des revendications 1 à 3, **caractérisé en ce que** la plaque de protection (14) présente une percée (26) au moins largement circulaire disposée coaxialement à la percée (20) de la plaque de verre (12) et dont le diamètre est petit par rapport au diamètre de la percée (20) de la plaque de verre (12), et que dans la percée (26) de la plaque de protection (14) est disposé un organe de réception (28) qui peut être relié de façon amovible et étanche à cette dernière, constitué d'un matériau résistant au claquage ou à la rupture et servant de fixation pour la commande de rotation (24), dont l'espace intérieur est tourné vers l'intérieur de l'ensemble de vitrage composite.

5. Ensemble de vitrage composite suivant la revendication 4, **caractérisé en ce que** l'organe de réception (28) est configuré en forme de chapeau, que le bord de chapeau de configuration large (30) de l'organe de réception (28) s'applique par une grande surface sur le côté intérieur de la plaque de protection (14) ou sur une feuille ou un revêtement de protection (34) étanche aux gaz et/ou aux liquides recouvrant cette dernière, et que la section de chapeau (32) de l'organe de réception (28) s'engage légèrement en travers de 1a percée (26) de la plaque de protection (14) et y est vissée de façon amovible, sur le côté extérieur de cette dernière, par une large bague filetée extérieure (36) qui s'applique fixement par une grande surface, dans l'état de fonctionnement serré, sur le côté extérieur de la plaque de protection (14) ou sur une feuille ou un revêtement de protection (34) étanche aux gaz ou aux liquides recouvrant cette dernière.

6. Ensemble de vitrage composite suivant l'une des revendications 4 et 5, **caractérisé en ce que** l'organe de réception (28) est constitué de métal ou de matière plastique antichoc.

7. Ensemble de vitrage composite suivant l'une des revendications 4 à 6, **caractérisé en ce qu'**un stator radialement extérieur (38) ainsi que dans celui-ci un rotor radialement intérieur (40) d'une commande de rotation (24) réalisée sous forme de moteur électrique sont disposés à l'intérieur de l'organe de réception (28), et que le rotor (40) est relié au disque rotatif (22) par l'intermédiaire d'un organe d'entraînement (42) tel qu'un arbre moteur.

8. Ensemble de vitrage composite suivant la revendication 7, **caractérisé en ce que** le rotor (40) est monté tournant sur un axe de rotor stationnaire fixe dans l'organe de réception (28).

9. Ensemble de vitrage composite suivant l'une des revendications 1 à 8, **caractérisé en ce qu'**un organe d'entraînement (42) de la commande de rotation (24) est relié à un disque de liaison (44) central relié fixement au disque rotatif (22).

10. Ensemble de vitrage composite suivant l'une des revendications 1 à 9, **caractérisé en ce que** l'étanchéité entre le bord du disque rotatif (22) et la percée (20) de la plaque de verre (12) est réalisée sous forme d'un joint sans contact, tel qu'une garniture à labyrinthe (46), disposé à l'intérieur de l'ensemble de vitrage composite.

11. Ensemble de vitrage composite suivant la revendication 10, **caractérisé en ce que** le joint sous forme de garniture à labyrinthe (46) est réalisé en deux parties et comporte un organe d'étanchéité stationnaire (48) annulaire ainsi qu'un organe d'étanchéité (50) en coopération étanche sans contact avec ce dernier, relié au disque rotatif (22) et pouvant tourner avec celui-ci.

12. Ensemble de vitrage composite suivant la revendication 11, **caractérisé en ce que** la plaque de verre (12) et la plaque de protection (14) présentent un écartement mutuel par l'intermédiaire d'une liaison marginale extérieure (16) et que l'organe d'étanchéité stationnaire (48) est fixé dans la zone de la percée (20) entre la plaque de verre (12) et la plaque de protection (14) ou d'une feuille ou d'un revêtement de protection (34) étanche aux liquides et/ou aux gaz, recouvrant cette dernière du côté intérieur.

13. Ensemble de vitrage composite suivant la revendication 10, **caractérisé en ce que** la percée (20) de la plaque de verre (12) présente du côté intérieur un épaulement annulaire de diamètre rétréci et que la garniture à labyrinthe (46) se situe entre celui-ci et le disque rotatif (22).

14. Ensemble de vitrage composite suivant la revendication 13, **caractérisé en ce que** la garniture à labyrinthe (46) est constituée de profils de verre, s'engageant l'un dans l'autre, de la plaque de verre (12) et du disque relatif (22), ou d'éléments en métal ou en matière plastique s'engageant l'un dans l'autre mis en place sur la plaque de verre (12) et sur le disque rotatif (22).

15. Ensemble de vitrage composite suivant l'une des revendications 1 à 14, **caractérisé en ce qu'**au moins toutes les zones de la plaque de protection (14) qui sont en liaison avec la garniture à labyrinthe (46) à l'intérieur de l'ensemble de vitrage composite sont recouvertes d'un revêtement ou d'une feuille de protection (34) étanche aux gaz et/ou aux liquides.

16. Ensemble de vitrage composite suivant l'une des revendications 1 à 15, **caractérisé en ce que** le disque rotatif (22) présente sur son côté opposé à la plaque de protection (14) un revêtement hydrophobe et/ou de protection contre la chaleur, tel qu'un revêtement Lotus ou un revêtement dans le nanodomaine.

17. Ensemble de vitrage composite suivant l'une des revendications 1 à 16, **caractérisé en ce que** la plaque de verre (12) présente sur son côté opposé à la plaque de protection (14) un revêtement hydrophobe et/ou de protection contre la chaleur, tel qu'un revêtement Lotus ou un revêtement dans le nanodomaine.

18. Ensemble de vitrage composite suivant l'une des revendications 1 à 17, **caractérisé en ce que** la commande de rotation (24) réalisée sous forme de moteur hydraulique ou pneumatique comporte un élément à aubes motrices fixé au disque rotatif (22) et relié à ce dernier et pouvant être alimenté en un flux hydraulique ou pneumatique, et un injecteur pneumatique ou hydraulique associé à celui-ci, fixé à l'ensemble de vitrage composite.

19. Ensemble de vitrage composite suivant la revendication 18, **caractérisé en ce que** l'élément à aubes motrices a une configuration annulaire avec plusieurs aubes motrices et est fixé coaxialement au côté intérieur du disque rotatif (22).

20. Ensemble de vitrage composite suivant l'une des revendications 1 à 19, **caractérisé par** un moyen pour produire un flux d'air ou de gaz à partir de l'intérieur de l'ensemble de vitrage composite au travers du joint (46) entre le disque rotatif (22) et la plaque de verre (12).

21. Ensemble de vitrage composite suivant la revendication 20, **caractérisé en ce que** le moyen pour produire un flux d'air ou de gaz est réalisé sous forme d'un anneau à aubes pouvant tourner avec le disque rotatif (22) et d'une admission d'air dans l'intérieur de l'ensemble de vitrage composite.

22. Ensemble de vitrage composite suivant l'une des revendications 1 à 21, **caractérisé en ce que** la commande de rotation (24) est déportée latéralement du champ visuel du disque rotatif (22) et est couplée au disque rotatif (22) par l'intermédiaire d'une transmission (52, 54, 56).

23. Ensemble de vitrage composite suivant la revendication 22, **caractérisé en ce que** la commande de rotation (24) est réalisée sous forme de moteur électrique ou de moteur hydraulique ou pneumatique.

24. Ensemble de vitrage composite suivant l'une des revendications 22 et 23, **caractérisé en ce que** la transmission comporte une roue motrice (52), reliée coaxialement à la commande de rotation (24), par ailleurs une roue menée (54), reliée coaxialenent au disque rotatif (22) sur le côté de ce dernier tourné vers la plaque de protection (14), et un élément de transmission de force sans fin (56), qui relie entre elles les deux roues (52, 54) situées dans un plan à l'intérieur de l'ensemble de vitrage composite stationnaire.

25. Ensemble de vitrage composite suivant la revendication 24, **caractérisé en ce qu'**un arbre de transmission (58) couplant la roue menée (54) au disque rotatif (22) est monté à l'intérieur de l'ensemble de vitrage composite.

26. Ensemble de vitrage composite suivant la revendication 25, **caractérisé en ce que** l'arbre de transmission (58) est relié à un disque de liaison centré (44), relié fixement au disque rotatif (22).

27. Ensemble de vitrage composite suivant l'une des revendications 25 et 26, **caractérisé en ce que** l'arbre de transmission (58) est monté par l'intermédiaire d'un palier (62) sur un bras de fixation étroit (60), qui est relié à l'extérieur du champ visuel du disque rotatif (22) à l'ensemble de vitrage composite.

28. Ensemble de vitrage composite suivant la revendication 27, **caractérisé en ce que** le bras de fixation (60) et l'organe de transmission de force (56) sont disposés avec recouvrement mutuel dans la direction du regard.

29. Ensemble de vitrage composite suivant l'une des revendications 24 à 28, **caractérisé en ce que** les deux roues (52, 54) sont réalisées sous forme de roues à courroie ou de roues dentées et que l'élément de transmission de force (56) est réalisé sous forme de courroie ou de chaîne.

30. Ensemble de vitrage composite suivant l'une des revendications 24 à 29, **caractérisé en ce que** la commande de rotation (24) et le disque rotatif (22) sont disposés sur le même côté des roues motrice et menée (52, 54).

31. Ensemble de vitrage composite suivant l'une des revendications 24 à 29, **caractérisé en ce que** la commande de rotation (24) et le disque rotatif (22) sont disposés sur des côtés opposés des roues motrice et menée (52, 54).

32. Ensemble de vitrage composite suivant l'une des revendications 27 à 31, **caractérisé en ce que** le bras de fixation (60) est fixé à la plaque de verre (12) et la commande de rotation (24) au bras de fixation (60).

33. Ensemble de vitrage composite suivant l'une des revendications 22 à 32, **caractérisé en ce que** la commande de relation (24) est déportée latéralement du champ visuel du disque rotatif (22) sur le bord de l'ensemble de vitrage composite ou de la garniture à labyrinthe (46).

34. Ensemble de vitrage composite suivant l'une des revendications 22 à 33, **caractérisé en ce que** la transmission est réalisée sous ferme d'engrenage, tel qu'engrenage à pignons coniques.

35. Ensemble de vitrage composite suivant la revendication 4, **caractérisé en ce que** l'organe de réception (28) comporte un organe de base (68) qui s'applique par une grande surface, par un bord annulaire large (70), sur le côté intérieur de la plaque de protection (14) ou sur un revêtement ou une feuille de protection (34) étanche aux liquides et/ou aux gaz recouvrant cette dernière, et que l'organe de base (68) s'engage légèrement par une saillie cylindrique (72) munie d'un filetage en travers de la percée (26) de la plaque de protection (14) et peut être vissé de façon amovible, sur le côté extérieur de cette dernière, avec un couvercle taraude extérieur (74) qui s'applique fixement par son bord, dans l'état de fonctionnement serré, par une grande surface sur le coté extérieur de la plaque de protection (14) ou sur un revêtement ou une feuille de protection étanche aux liquides et/ou aux gaz recouvrant cette dernière.

36. Ensemble de vitrage composite suivant la revendication 35, **caractérisé en ce qu'**une roue à aubes (76) hydraulique ou pneumatique, disposée à l'intérieur de la saillie (72), au bord périphérique de laquelle est associé un injecteur hydraulique ou pneumatique (78) maintenu sur l'organe de base (68), est reliee au disque rotatif (22) par l'intermédiaire d'un organe d'entraînement (42) qui est configuré sous forme d'arbre moteur au moins simplement étagé, dont le diamètre augmente en direction du disque rotatif (22), et que l'organe d'entraînement (42) est monté tournant dans l'organe de base (68) par l'intermédiaire de deux paliers (80, 82) de taille différente radialement à l'intérieur et à l'extérieur, associés aux zones diamétrales étagées.
